(19) Europäisches Patentamt / European Patent Office / Office européen des brevets

(11) **EP 3 467 428 A1**

(12) **EUROPEAN PATENT APPLICATION**
published in accordance with Art. 153(4) EPC

(43) Date of publication:
**10.04.2019 Bulletin 2019/15**

(21) Application number: **17806258.4**

(22) Date of filing: **27.04.2017**

(51) Int Cl.:
**G01B 11/00** (2006.01)

(86) International application number:
**PCT/JP2017/016733**

(87) International publication number:
**WO 2017/208699 (07.12.2017 Gazette 2017/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.05.2016 JP 2016107357**

(71) Applicant: **Sony Corporation
Tokyo 108-0075 (JP)**

(72) Inventors:
• **INABA, Seijiro**
  **Tokyo 108-0075 (JP)**
• **IKEDA, Hiroshi**
  **Tokyo 108-0075 (JP)**
• **IKEDA, Nobuho**
  **Tokyo 108-0075 (JP)**

(74) Representative: **D Young & Co LLP
120 Holborn
London EC1N 2DY (GB)**

(54) **INFORMATION PROCESSING DEVICE, INFORMATION PROCESSING METHOD, PROGRAM, AND IMAGE CAPTURING SYSTEM**

(57) A data processing unit of an information processing apparatus 50 calculates the position and the attitude in a three-dimensional space of a calibration board 60 in a captured image of a prescribed imaging device among imaging devices 20-1 to 20-7, and calculates the position and the attitude of the calibration board 60 in a captured image acquired by another imaging device different from the prescribed imaging device on the basis of the calculated position and attitude in the three-dimensional space. The data processing unit presents the imaging situation of a moving calibration board for each imaging device by means of display units of the information processing apparatus 50 and the imaging devices 20-1 to 20-7. By performing imaging using the imaging situation, a situation where the movement and the change in the inclination of the calibration board 60 are small and it is necessity to re-image the calibration board 60 can be prevented, and high-accuracy calibration processing can be performed with good efficiency.

FIG. 1

**Description**

Technical Field

This technology relates to an information processing apparatus, an information processing method, a program, and an imaging system, and makes it possible to calibrate imaging devices with good efficiency.

Background Art

Thus far, there have been cases where a special video effect is obtained and motion information of a subject is acquired by using a plurality of imaging devices. For example, imaging is performed while a plurality of imaging devices are arranged around a subject; thus, the production of what is called bullet-time video, which provides an effect of looking as if an imaging device were moved at ultra-high speed or the like, motion capture in which motion data of a subject is collected, etc. are performed. In a case where a plurality of imaging devices are thus used, the imaging devices are calibrated in order to improve the stability of pallet-time video, the data accuracy of motion capture, etc., and parameters indicating the focal distance, lens distortion, installation position, attitude, etc. of the imaging device are acquired.
Further, in the calibration of imaging devices, a plurality of images between which the relative positional relationship between a calibration board and an imaging device is different are captured, for example as shown in Patent Literature 1.

Citation List

Patent Literature

Patent Literature 1: JP 2014-070978A

Disclosure of Invention

Technical Problem

Meanwhile, to enhance the accuracy of calibration in order to improve the stability of pallet-time video, the data accuracy of motion capture, etc., it is necessary to move a calibration board in a large area in the space to be imaged. Further, the processing of detecting a calibration board from captured images on a real time basis imposes a large calculation load, and thus the detection of the calibration board is performed in post-processing. Hence, in a case where in the post-processing it is noticed that the movement area of the calibration board is small, it is necessary to perform imaging again, and calibration cannot be performed with good efficiency.
Thus, an object of this technology is to provide an information processing apparatus, an information processing method, a program, and an imaging system that can perform calibration with good efficiency.

Solution to Problem

A first aspect of this technology is an information processing apparatus including: a data processing unit configured to calculate a position and an attitude in a three-dimensional space of a calibration index in a captured image of a prescribed imaging device and calculate a position and an attitude of the calibration index in a captured image of an imaging device different from the prescribed imaging device on a basis of the position and the attitude in the three-dimensional space, and present an imaging situation of a moving calibration index for each of the imaging devices.
In this technology, the data processing unit acquires internal parameters and external parameters for a prescribed imaging device and other imaging devices different from the prescribed imaging device. The data processing unit groups a prescribed imaging device and other imaging devices in such a manner that an imaging device overlaps between adjacent groups; captures still images of the calibration index for each group; and calculates internal parameters and external parameters from a prescribed number of still images between which the position and the attitude of the calibration index are different, for example. Further, the data processing unit uses, as internal parameters, information held in the imaging device, and uses, as external parameters, attachment information regarding the attachment position and the attitude of the imaging device, for example.
The data processing unit uses acquired internal parameters and external parameters to calculate the position and the attitude in the three-dimensional space of the calibration index in a captured image of a prescribed imaging device. Further, the data processing unit calculates the position and the attitude of the calibration index in a captured image of another imaging device different from the prescribed imaging device, on the basis of the calculated position and attitude in the three-dimensional space.

The data processing unit presents the imaging situation of a moving calibration index, such as a space coverage situation and an attitude coverage situation, for each imaging device on the basis of the calculated position and attitude of the calibration index in a captured image. In the space coverage situation, a region where the calibration index is located and a region where the calibration index is not located can be distinguished on an imaging screen. In the state coverage situation, the attitude of the calibration index is classified into a plurality of attitude categories, and an attitude category in which the attitude of the calibration index is included and an attitude category in which the attitude of the calibration index is not included can be distinguished on an imaging screen.

Further, the data processing unit sets, as a prescribed imaging device, an imaging device in which the calibration index is photographed in a large size, with a small inclination, and in a front position. Further, the data processing unit generates, for each imaging device, display information showing the imaging situation of a moving calibration index, and outputs the display information to the corresponding imaging device.

The data processing unit acquires, from each of the imaging devices, a captured image in which the region showing the calibration index is different from the region showing the calibration index already imaged and a captured image in which the attitude of the calibration index is, for example, the first in the corresponding attitude category, and performs calibration processing using the acquired captured images.

A second aspect of this technology is an information processing method including: calculating a position and an attitude in a three-dimensional space of a calibration index in a captured image of a prescribed imaging device and calculating a position and an attitude of the calibration index in a captured image of an imaging device different from the prescribed imaging device on a basis of the position and the attitude in the three-dimensional space; and presenting an imaging situation of a moving calibration index by means of a data processing unit for each of the imaging devices.

A third aspect of this technology is a program for causing a computer to execute calibration of a plurality of imaging devices, the program causing the computer to perform: a function of calculating a position and an attitude in a three-dimensional space of a calibration index in a captured image of a prescribed imaging device; a function of calculating a position and an attitude of the calibration index in a captured image of an imaging device different from the prescribed imaging device on a basis of the position and the attitude in the three-dimensional space; and a function of presenting an imaging situation of a moving calibration index by means of a data processing unit for each of the imaging devices.

Note that the program of the present technology is, for example, a program that can be provided by a storage medium or a communication medium that is provided in a computer-readable format to general-purpose computers capable of executing various programs and codes, such as a storage medium such as an optical disk, a magnetic disk, or a semiconductor memory, or a communication medium such as a network. By providing such a program in a computer-readable format, processing in accordance with the program is performed on a computer.

A fourth aspect of this technology is an imaging system including: a plurality of imaging devices configured to image a desired subject from different positions; and an information processing apparatus configured to calibrate the plurality of imaging devices by using captured images of a calibration index acquired by the plurality of imaging devices. The information processing apparatus includes a data processing unit configured to calculate a position and an attitude in a three-dimensional space of the calibration index in a captured image of a prescribed imaging device and calculate a position and an attitude of the calibration index in a captured image of an imaging device different from the prescribed imaging device on a basis of the position and the attitude in the three-dimensional space, and present an imaging situation of a moving calibration index for each of the imaging devices.

Advantageous Effects of Invention

According to this technology, a data processing unit calculates the position and the attitude in a three-dimensional space of a calibration index in a captured image of a prescribed imaging device, and calculates the position and the attitude of the calibration index in a captured image acquired by an imaging device different from the prescribed imaging device, on the basis of the position and the attitude in the three-dimensional space; and presents the imaging situation of a moving calibration index for each imaging device. Hence, it is easy to perform imaging while setting the calibration index in positions in a large area and with desired inclinations, and the re-imaging of the calibration index can be prevented; thus, high-accuracy calibration processing can be performed with good efficiency. Note that the effects described in the present specification are only examples and are not limitative ones, and there may be further an additional effect.

Brief Description of Drawings

FIG. 1 is a diagram illustrating a configuration of an imaging system.

FIG. 2 is a diagram illustrating a configuration of an information processing apparatus.

FIG. 3 is a flow chart showing calibration operation.

FIG. 4 is a flow chart illustrating simple parameter acquisition processing.

FIG. 5 is a diagram illustrating imaging manipulation displaying for simple parameter acquisition.

FIG. 6 is a diagram showing positions and attitudes of a calibration board in a case where simple parameters are calculated.

FIG. 7 is a diagram illustrating instruction displaying in imaging manipulation displaying for simple parameter acquisition.

FIG. 8 is a flow chart illustrating imaging processing for fine calibration.

FIG. 9 is a diagram showing relationships between coordinate systems of a calibration boat, and an imaging device C1 and another imaging device C2 that are objects to be analyzed, and external parameters.

FIG. 10 is a diagram illustrating a coordinate system of a calibration board.

FIG. 11 is a diagram for describing in what positions of a captured image acquired by the imaging device C2 four corner points are.

FIG. 12 is a diagram showing a case where attitudes of a calibration board with respect to the imaging devices C1 and C2 are found from relationships between a coordinate system of the calibration board and coordinate systems of the imaging devices.

FIG. 13 is a diagram illustrating displaying of space coverage states.

FIG. 14 is a diagram illustrating displaying of attitude coverage states.

FIG. 15 is a diagram illustrating a case where a space coverage situation and an attitude coverage situation are displayed by a display unit 21 of an imaging device 20-1.

Mode(s) for Carrying Out the Invention

Hereinbelow, embodiments for implementing the present technology are described. Note that the description is given in the following order.

1. Configuration of imaging system
2. Configuration and operation of information processing apparatus

<1. Configuration of imaging system>

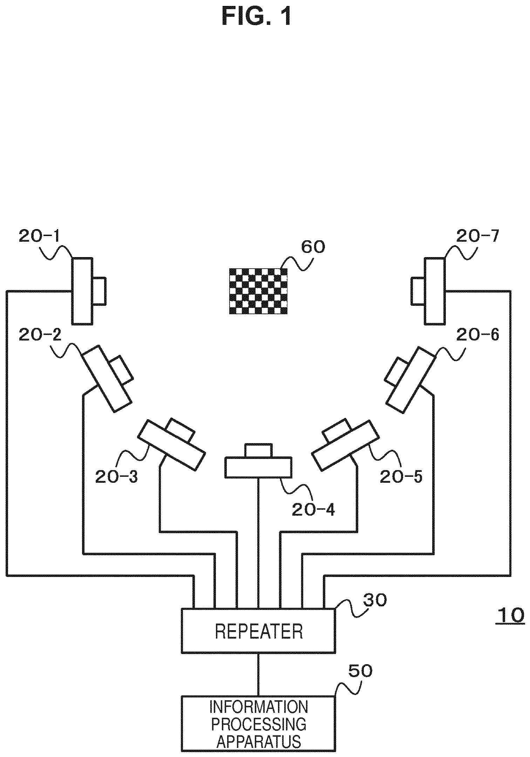

FIG. 1 illustrates the configuration of an imaging system using an information processing apparatus of the present technology. An imaging system 10 includes a plurality of imaging devices (in the following description, a case where seven imaging devices 20-1 to 20-7 are used is illustrated) and an information processing apparatus 50. Note that, although FIG. 1 shows a case where the imaging devices 20-1 to 20-7 and the information processing apparatus 50 perform wire or wireless communication via a repeater 30, also a configuration in which the imaging devices 20-1 to 20-7 and the information processing apparatus 50 perform wire or wireless communication without using the repeater 30 is possible.

The imaging devices 20-1 to 20-7 are arranged around a subject to be imaged. Further, the imaging devices 20-1 to 20-7 perform various settings, the control of imaging operation, etc. on the basis of control data supplied from the information processing apparatus 50. Furthermore, the imaging devices 20-1 to 20-7 transmit, to the information processing apparatus 50, information data showing setting states, lens characteristics, etc., and still images, live view images, moving images, etc. obtained by performing imaging operation.

The information processing apparatus 50 controls the imaging devices 20-1 to 20-7 to acquire captured images. Further, the information processing apparatus 50 performs calibration processing of the imaging devices 20-1 to 20-7. The information processing apparatus 50 acquires simple parameters of the imaging devices 20-1 to 20-7 in calibration processing. Further, the information processing apparatus 50 uses simple parameters to calculate the position and the attitude in a three-dimensional space of a calibration index, for example a calibration board 60, in a captured image acquired by a prescribed imaging device selected from the imaging devices 20-1 to 20-7. Furthermore, the information processing apparatus 50 uses simple parameters to calculate the position and the attitude of the calibration board 60 in a captured image of an imaging device different from the prescribed imaging device, on the basis of the calculated position and attitude in the three-dimensional space. Further, on the basis of the result of calculation of the position and attitude, the information processing apparatus 50 presents the imaging situation of a moving calibration board 60 for each imaging device. Furthermore, the information processing apparatus 50 performs calibration by using captured images in which a moving calibration board 60 is captured by the imaging devices 20-1 to 20-7, and thereby generates parameters with higher accuracy than simple parameters.

<2. Configuration and operation of information processing apparatus>

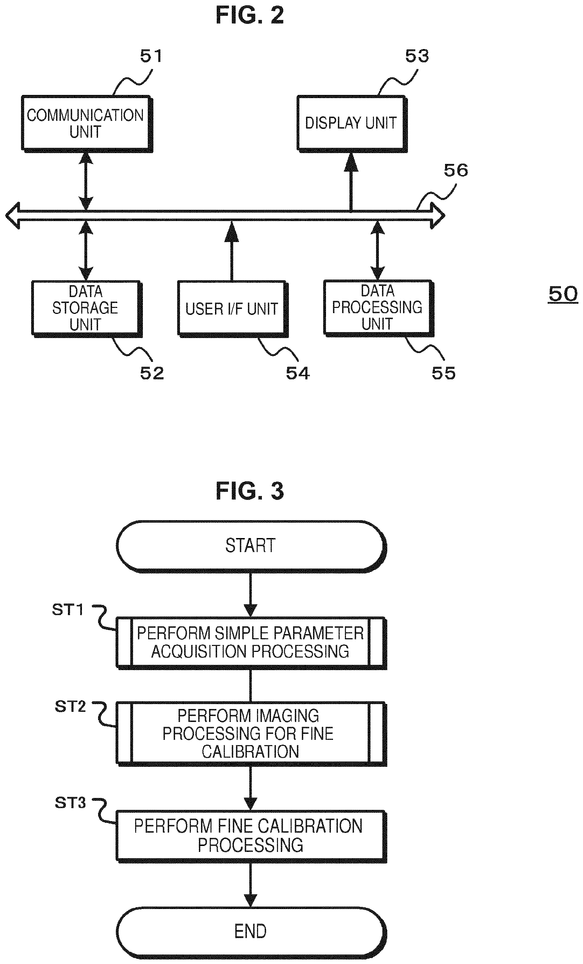

FIG. 2 illustrates the configuration of an information processing apparatus. The information processing apparatus 50 includes a communication unit 51, a data storage unit 52, a display unit 53, a user interface (I/F) unit 54, and a data processing unit 55, and these units are connected via, for example, a bus 56.

The communication unit 51 transmits control data generated by the data processing unit 55 to the imaging devices 20-1 to 20-7. Further, the communication unit 51 causes image data and information data of captured images received from the imaging devices 20-1 to 20-7 to be stored in the data storage unit 52.

The display unit 53 displays various menus, manipulation regarding calibration, the imaging situation of the calibration board 60, etc.

The user interface unit 54 includes a keyboard, a touch panel, a manipulation switch, or the like; and generates a manipulation signal in accordance with the user's manipulation, and outputs the manipulation signal to the data processing unit 55.

The data processing unit 55 performs the operation of each unit and communication with the imaging devices 20-1 to 20-7 on the basis of manipulation signals generated by the user interface unit 54, and performs calibration processing of the imaging devices 20-1 to 20-7 in accordance with the user's manipulation. In calibration processing, the data processing unit 55 calculates the position and the attitude in the three-dimensional space of the calibration board in a captured image of a prescribed imaging device. Further, the data processing unit 55 calculates the position and the attitude of the calibration boat in a captured image of an imaging device different from the prescribed imaging device, on the basis of the calculated position and attitude in the three-dimensional space; and displays the imaging situation of a moving calibration board by means of the display unit 53 for each imaging device.

FIG. 3 is a flow chart showing calibration operation. In step ST1, the data processing unit performs simple parameter acquisition processing. It is sufficient for the simple parameter to have such an accuracy that the position and the attitude of the calibration board can be determined; in simple parameter acquisition processing, in order that simple parameters can be acquired in a short time, calibration is performed using a prescribed number of still images that are captured while the position and the attitude of the calibration board are changed.

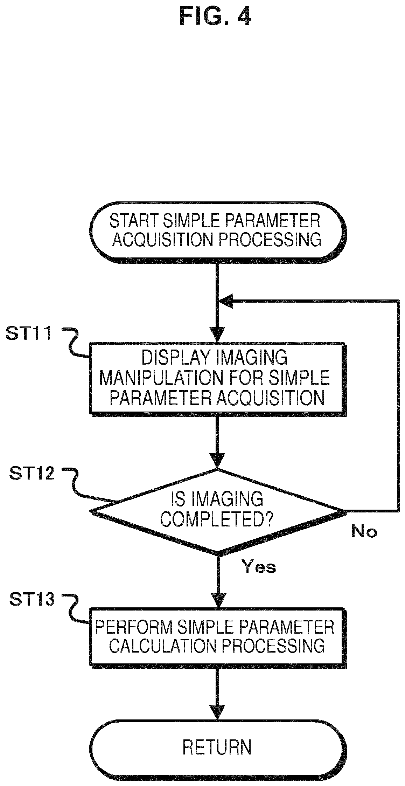

FIG. 4 is a flow chart illustrating simple parameter acquisition processing. In simple parameter acquisition processing, in order to shorten the time, simple parameters are calculated using a prescribed number of still images that are captured while the position and the attitude of the calibration board are changed. Further, in order to enable the acquisition of still images in a short time, a plurality of imaging devices are grouped, and the imaging devices in a group image the calibration board simultaneously.

The grouping is performed such that the calibration board appears simultaneously, the calibration board can be detected by the imaging devices of the same group even if the calibration board is tilted by a prescribed amount, and an imaging device overlaps between adjacent groups. For example, among the imaging devices arranged as shown in FIG. 1, the imaging devices 20-3 and 20-5, of which the directions of the optical axes of lenses are within prescribed angle differences from the imaging device 20-4 located at the center, are sorted in the same group as the imaging device 20-4. Further, at least one imaging device located on the end side in a group is included in an adjacent group so that a positional relationship between groups can be calculated from a still image outputted by the imaging device included in a plurality of groups. For example, the imaging devices 20-1 to 20-3 are sorted in an identical group, and the imaging devices 20-5 to 20-7 are sorted in an identical group. By thus performing grouping, in what position on the screen and in what attitude the calibration board imaged by one imaging device is imaged in another imaging device can be calculated as described later. Further, still images used for the calculation of simple parameters can be acquired by a small amount of imaging manipulation.

In step ST11, the data processing unit performs imaging manipulation displaying for simple parameter acquisition. The data processing unit 55 causes the display unit 53 to perform imaging manipulation displaying for simple parameter acquisition, and goes to step ST12.

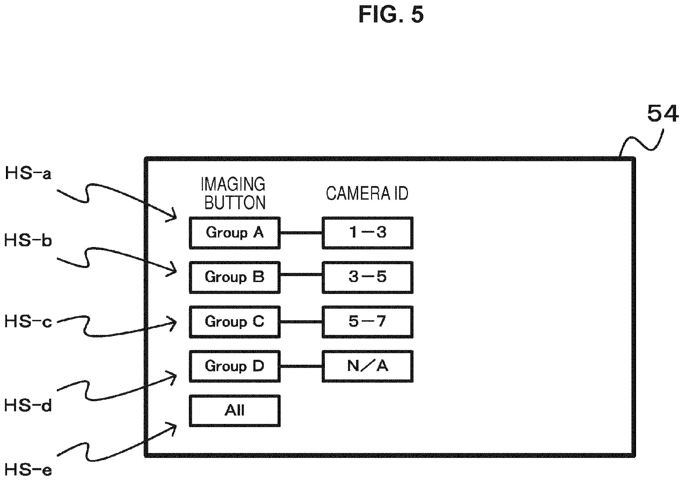

FIG. 5 illustrates imaging manipulation displaying for simple parameter acquisition. In imaging manipulation displaying for simple parameter acquisition, the imaging devices 20-1 to 20-7 are grouped as described above, and an imaging button is provided on a group basis. Further, in each of displays HS-a to HS-d of imaging buttons, camera IDs assigned to the group of imaging devices corresponding to the imaging button are displayed in association. Note that, in FIG. 5, the camera ID of the imaging device 20-1 shown in FIG. 1 is "1," and the camera IDs of the imaging devices 20-2 to 20-7 are "2" to "7." Further, the imaging devices 20-1 to 20-3 are assigned to manipulation button "Group A," the imaging devices 20-3 to 20-5 to manipulation button "Group B," and the imaging devices 20-5 to 20-7 to manipulation button "Group C." Note that display "N/A" showing that there is no assignment of an imaging device is provided to manipulation button "Group D;" furthermore, also display HS-e of imaging button "ALL" for performing imaging with all the imaging devices is provided in the imaging manipulation displaying for simple parameter acquisition.

In step ST12, the data processing unit determines whether imaging is completed or not. The data processing unit 55 determines whether the imaging of still images used for the calculation of simple parameters is completed or not; in a case where the imaging is not completed, the procedure returns to step ST11; in a case where the imaging is completed, the procedure goes to step ST13.

The user interface unit 54 of the information processing apparatus 50 is provided on a screen of the display unit 53, for example; in a case where, for example, on the basis of a manipulation signal the data processing unit 55 has determined that touch manipulation has been performed on manipulation button "Group A," the data processing unit 55 transmits control data to the imaging devices 20-1, 20-2, and 20-3 to cause them to perform the operation of imaging still images, and causes the acquired still images to be transmitted to the information processing apparatus 50. Further, the data processing unit 55 manages the number of times of imaging performed by each group; in a case where the data processing unit 55 has acquired a prescribed number of still images from each of the imaging devices 20-1 to 20-7, the data processing unit 55 determines that the imaging of still images used for the calculation of simple parameters is completed.

Further, in imaging manipulation displaying for simple parameter acquisition, if the data processing unit 55 displays the number of still images to be used for the calculation of simple parameters, which number is prescribed, and the number of still images acquired, the data processing unit 55 can easily grasp the imaging situation in each group. Further, when performing imaging, if an instruction regarding the attitude and the position of the calibration board is displayed, still images suitable for the acquisition of simple parameters can be acquired.

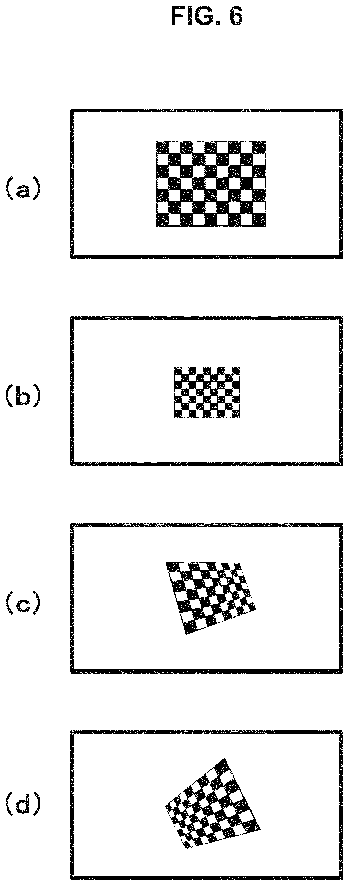

The data processing unit 55 calculates simple parameters using, for example, a technique disclosed in the literature of "Zhengyou Zhang, "A Flexible New Technique for Camera Calibration," Dec. 1998, Technical Report MSR-TR-98-71." In this case, four or more still images between which the position and the attitude of the calibration board are different and in which the entire calibration board appears are acquired. For example, the data processing unit 55 instructs each group to perform imaging while setting the calibration board in a position like any of those shown in FIG. 6. Note that (a) of FIG. 6 shows a case where the calibration board is set in a near position in front of the imaging device, and (b) of FIG. 6 shows a case where the calibration board is set in a distant position in front of the imaging device. Further, (c) and (d) of FIG. 6 illustrate cases where the calibration board is set in positions tilted in different directions with respect to the imaging device. In a case where imaging for each position of the calibration board indicated by the instruction is performed by the respective group, the data processing unit 55 determines that the imaging of still images used for the calculation of simple parameters is ended.

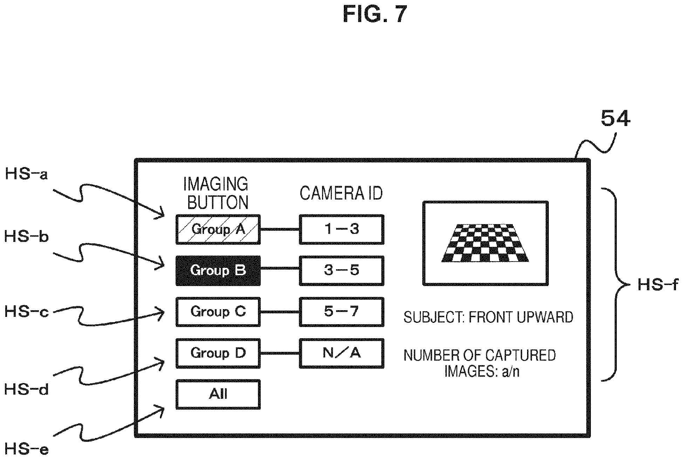

FIG. 7 illustrates instruction displaying in imaging manipulation displaying for simple parameter acquisition. In instruction displaying, in what position and attitude to image the calibration board is indicated for each group. For example, the position and the attitude of the calibration board are indicated by providing a calibration board setting instruction display HS-f. Further, a display showing the number of still images that are to be acquired while the position and the attitude of the calibration board are changed, which number is prescribed, and where the current image is in the order of the images may be provided in the calibration board setting instruction display HS-f. Furthermore, the displaying of imaging buttons on a group basis enables the distinction between a display showing that the imaging of the prescribed number of still images with change of the position and the attitude of the calibration board is completed, for example display HS-a of manipulation button "Group A," a display showing that the current situation is in the course of the imaging of the prescribed number of still images, for example display HS-b of manipulation button "Group B," and a display showing that the imaging of the prescribed number of still images is not yet performed, for example display HS-c of the imaging buttons of manipulation buttons "Group C to Group E." By performing such displaying, the user can easily acquire still images used for the calculation of simple parameters.

In step ST13, the data processing unit performs simple parameter calculation processing. The data processing unit 55 uses still images acquired by the processing of step ST11 and ST12 to perform simple parameter calculation processing. The data processing unit 55 calculates simple parameters by using the technique described above or the like, and finds the lens focal distance, the center of the image, and the lens distortion coefficient, which are internal parameters, and a rotation component and a translation component, which are external parameters.

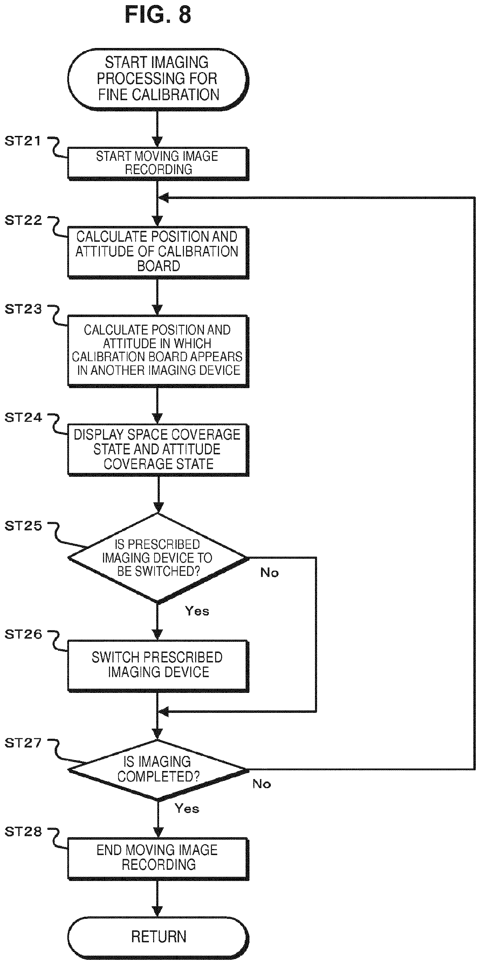

If simple parameter acquisition processing ends, the data processing unit 55 goes from step ST1 to step ST2 of FIG. 3, and performs imaging processing for fine calibration. FIG. 8 is a flow chart illustrating imaging processing for fine calibration.

In step ST21, the data processing unit causes moving image recording to start. The data processing unit 55 causes the imaging devices 20-1 to 20-7 to start the capture of moving images, and causes the generated moving images to be stored in the imaging devices. Further, the data processing unit 55 acquires a moving image from a prescribed imaging device that generates a captured image used for the calculation of the position and the attitude in the three-dimensional space of the calibration boat, and goes to step ST22. Note that the prescribed imaging device may be set in advance, or may be designated by the user.

In step ST22, the data processing unit calculates the position and the attitude of the calibration board. The data processing unit 55 uses a moving image generated by a prescribed imaging device to calculate the position and the attitude in the three-dimensional space of the calibration boat. Further, the data processing unit 55 calculates the position and the attitude of the calibration index in a captured image of an imaging device different from the prescribed imaging device, on the basis of the calculated position and attitude in the three-dimensional space of the calibration board; and goes to step ST23.

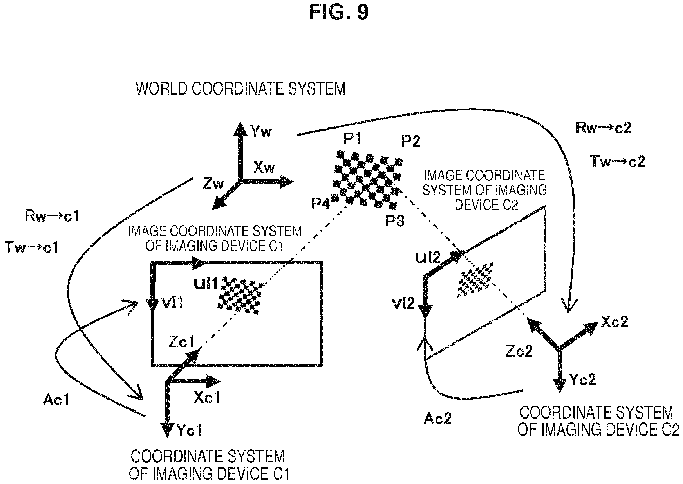

Next, the calculation of the position and the attitude in another imaging device of the calibration board imaged by a prescribed imaging device is described using FIG. 9 to FIG. 12. In a prescribed imaging device C1 and another imaging device C2 different from the prescribed imaging device C1, external parameters and internal parameters have been acquired by simple parameter acquisition processing. Note that an external parameter indicating a rotation component in the prescribed imaging device C1 is denoted by parameter $R_{w->c1}$, an external parameter indicating a translation component is denoted by parameter $T_{w->c1}$, and internal parameters are denoted by $A_{c1}$. Further, an external parameter indicating a rotation component in the imaging device C2 is denoted by parameter $R_{w->c2}$, an external parameter indicating a translation component is denoted by parameter $T_{w->c2}$, and internal parameters are denoted by $A_{c2}$.

FIG. 9 shows relationships between coordinate systems of the calibration boat, and the imaging device C1 and the other imaging device C2 that are objects to be analyzed, and external parameters. Note that the world coordinate system is represented by $()_w$, the coordinate system of the imaging device C1 is represented by $()_{c1}$, and the coordinate system of the imaging device C2 is represented by $()_{c2}$. Further, an image coordinate system of the image acquired by the imaging device C1 is represented by $()_{I1}$, and an image coordinate system of the image acquired by the imaging device C2 is represented by $()_{I2}$.

In the imaging device C1 and the imaging device C2, the relations of Formulae (1) to (4) hold with regard to the external parameters and the internal parameters.

[Math. 1]

$$\begin{pmatrix} X \\ Y \\ Z \\ 1 \end{pmatrix}_{c1} = \begin{pmatrix} R_{w\to c1} & T_{w\to c1} \\ 0 & 1 \end{pmatrix} \begin{pmatrix} X \\ Y \\ Z \\ 1 \end{pmatrix}_{w} \quad \cdots (1)$$

$$s \begin{pmatrix} u \\ v \\ 1 \end{pmatrix}_{I1} = A_{c1} \begin{pmatrix} X \\ Y \\ Z \\ 1 \end{pmatrix}_{c1} \quad \cdots (2)$$

$$\begin{pmatrix} X \\ Y \\ Z \\ 1 \end{pmatrix}_{c2} = \begin{pmatrix} R_{w\to c2} & T_{w\to c2} \\ 0 & 1 \end{pmatrix} \begin{pmatrix} X \\ Y \\ Z \\ 1 \end{pmatrix}_{w} \quad \cdots (3)$$

$$s \begin{pmatrix} u \\ v \\ 1 \end{pmatrix}_{I2} = A_{c2} \begin{pmatrix} X \\ Y \\ Z \\ 1 \end{pmatrix}_{c2} \quad \cdots (4)$$

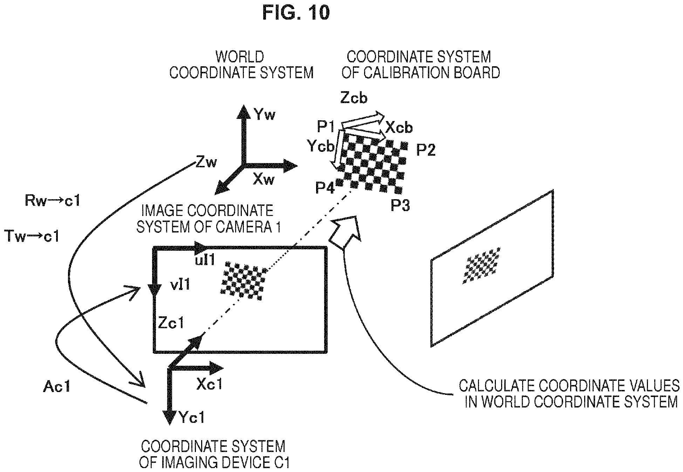

In a case where the internal parameters of the imaging device are already known, the estimation of external parameters from a set of three-dimensional coordinates of a plurality of points and two-dimensional coordinates on an image in which the points are imaged is known as a solution to the Perspective-n-Point problem (the PnP problem). By this solution, Formula (5) can be derived from the calibration board of a captured image acquired by the imaging device C1. Note that the coordinate system $()_{cb}$ is a coordinate system of the calibration board, as shown in FIG. 10.

[Math. 2]

$$\begin{pmatrix} X \\ Y \\ Z \\ 1 \end{pmatrix}_{c1} = \begin{pmatrix} R_{cb \to c1} & T_{cb \to c1} \\ 0 & 1 \end{pmatrix} \begin{pmatrix} X \\ Y \\ Z \\ 1 \end{pmatrix}_{cb} \quad \cdots (5)$$

Therefore, on the basis of Formula (1) and Formula (5), a point on the calibration board imaged by the imaging device C1 can be expressed by the world coordinate system on the basis of Formula (6), as shown in FIG. 10.
[Math. 3]

$$\begin{pmatrix} X \\ Y \\ Z \\ 1 \end{pmatrix}_{w} = \begin{pmatrix} R_{w \to c1} & T_{w \to c1} \\ 0 & 1 \end{pmatrix}^{-1} \begin{pmatrix} X \\ Y \\ Z \\ 1 \end{pmatrix}_{c1}$$

$$= \begin{pmatrix} R_{w \to c1} & T_{w \to c1} \\ 0 & 1 \end{pmatrix}^{-1} \begin{pmatrix} R_{cb \to c1} & T_{cb \to c1} \\ 0 & 1 \end{pmatrix} \begin{pmatrix} X \\ Y \\ Z \\ 1 \end{pmatrix}_{cb} \quad \cdots (6)$$

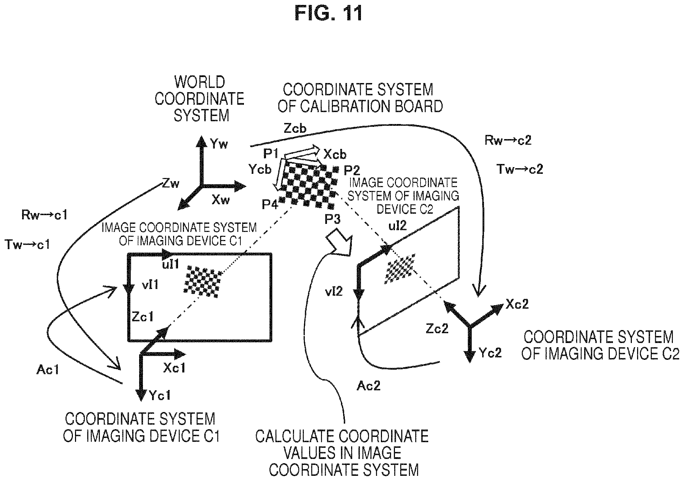

In step ST23, the data processing unit calculates the position in another imaging device where the calibration board appears and the attitude of the calibration board with respect to the imaging device. From coordinate values in the world coordinate system that have become clear for four corner points (PI, P2, P3, and P4) of the calibration board, the data processing unit 55 can, on the basis of Formula (7), calculate in what positions of a captured image acquired by the imaging device C2 the four corner points are, as shown in FIG. 11. Note that Formula (7) is a formula in which Formula (3) and Formula (6) are applied to Formula (4).
[Math. 4]

$$s \begin{pmatrix} u \\ v \\ 1 \end{pmatrix}_{I2} = A_{c2} \begin{pmatrix} X \\ Y \\ Z \\ 1 \end{pmatrix}_{c2}$$

$$= A_{c2} \begin{pmatrix} R_{w \to c2} & T_{w \to c2} \\ 0 & 1 \end{pmatrix} \begin{pmatrix} X \\ Y \\ Z \\ 1 \end{pmatrix}_{w}$$

$$= A_{c2} \begin{pmatrix} R_{w \to c2} & T_{w \to c2} \\ 0 & 1 \end{pmatrix} \begin{pmatrix} R_{w \to c1} & T_{w \to c1} \\ 0 & 1 \end{pmatrix}^{-1} \begin{pmatrix} R_{cb \to c1} & T_{cb \to c1} \\ 0 & 1 \end{pmatrix} \begin{pmatrix} X \\ Y \\ Z \\ 1 \end{pmatrix}_{cb} \quad \cdots (7)$$

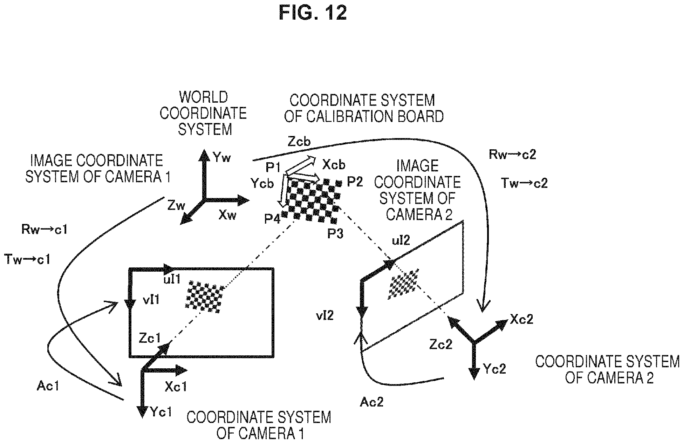

Further, the data processing unit 55 can find the attitudes of the calibration board with respect to the imaging devices C1 and C2 from relationships between the coordinate system of the calibration board and the coordinate systems of the imaging devices. The coordinate system of the calibration board shown in FIG. 12 can be transformed to the coordinate system of the imaging device C2 by Formula (8), which is based on Formula (3) and Formula (6).
[Math. 5]

$$\begin{pmatrix} X \\ Y \\ Z \\ 1 \end{pmatrix}_{c2} = \begin{pmatrix} R_{w \to c2} & T_{w \to c2} \\ 0 & 1 \end{pmatrix} \begin{pmatrix} X \\ Y \\ Z \\ 1 \end{pmatrix}_{w}$$

$$= \begin{pmatrix} R_{w \to c2} & T_{w \to c2} \\ 0 & 1 \end{pmatrix} \begin{pmatrix} R_{w \to c1} & T_{w \to c1} \\ 0 & 1 \end{pmatrix}^{-1} \begin{pmatrix} R_{cb \to c1} & T_{cb \to c1} \\ 0 & 1 \end{pmatrix} \begin{pmatrix} X \\ Y \\ Z \\ 1 \end{pmatrix}_{cb} \quad \cdots (8)$$

Further, unit vectors in the directions of the x-axis, the y-axis, and the z-axis in the coordinate system of the calibration board are represented by $(e_x, e_y, e_z)_{cb}$. Note that $e_x$, $e_y$, and $e_z$ are shown in Formulae (9) to (11).
[Math. 6]

$$ex = \begin{pmatrix} 1 \\ 0 \\ 0 \\ 1 \end{pmatrix}_{cb} \quad \cdots (9)$$

$$ey = \begin{pmatrix} 0 \\ 1 \\ 0 \\ 1 \end{pmatrix}_{cb} \quad \cdots (10)$$

$$ez = \begin{pmatrix} 0 \\ 0 \\ 1 \\ 1 \end{pmatrix}_{cb} \quad \cdots (11)$$

The data processing unit 55 can calculate the attitude of the calibration board with respect to the imaging device C1 by, on the basis of Formula (5), transforming the unit vectors in the coordinate system of the calibration board to those in the coordinate system of the imaging device C1. Further, the data processing unit 55 can calculate the attitude of the calibration board with respect to the imaging device C2 by, on the basis of Formula (8), transforming the unit vectors in the coordinate system of the calibration board to those in the coordinate system of the imaging device C2.
The data processing unit 55 uses the acquired simple parameters to calculate in what position and what attitude in a captured image of another imaging device the calibration board in a captured image acquired by the imaging device C1 is imaged, and goes to step ST24.
In step ST24, the data processing unit displays a space coverage state and an attitude coverage state. The data processing unit 55 accumulates calculated positions of the calibration board, and displays, on an imaging screen, a space coverage state that enables the distinction between a region where the calibration board is located and a region where the calibration board is not located. Further, the data processing unit 55 classifies the attitude of the calibration board into a plurality of attitude categories. On the basis of the classification result, the data processing unit 55 displays, on an imaging screen, an attitude coverage situation that enables the distinction between an attitude category in which the attitude of the calibration board is included and an attitude category in which the attitude of the calibration index is not included, and goes to step ST25.

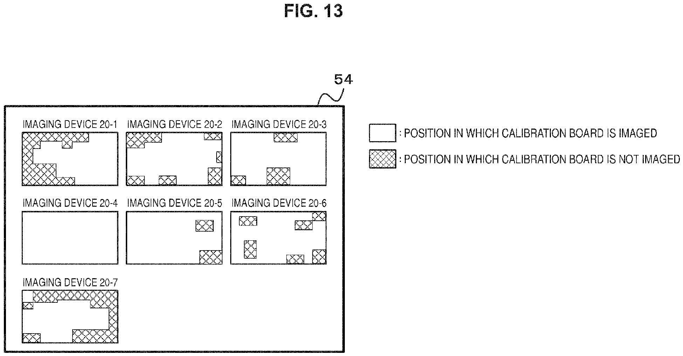

FIG. 13 illustrates the displaying of space coverage states. For each of the imaging devices 20-1 to 20-7, the data processing unit 55 uses the calculated position of the calibration board to show a region where the calibration board is imaged, as a display different from the other regions. For example, in FIG. 13, regions where the calibration board is not imaged are shown by hatching. By displaying such a space coverage situation, the data processing unit 55 clearly shows the user regions where the calibration board is not imaged. Further, the data processing unit 55 may transmit information showing the space coverage situation to each of the imaging devices 20-1 to 20-7, and may display the space coverage situation individually for the imaging devices 20-1 to 20-7. By the data processing unit 55 causing such a space coverage situation to be displayed, the user can capture moving images while moving the calibration board in a larger area with reference to the display of the space coverage situation.

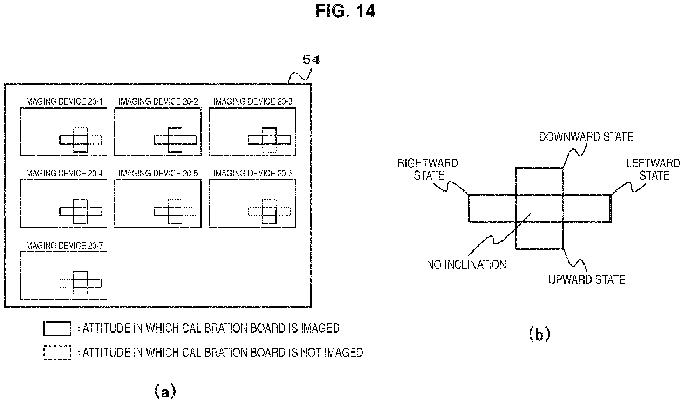

FIG. 14 illustrates the displaying of attitude coverage states. For each of the imaging devices 20-1 to 20-7, the data processing unit 55 uses the calculated attitude of the calibration board to show an attitude category in which the calibration board is imaged, as a display different from the other attitude categories. For example, in the displaying of attitude coverage states, as shown in (b) of FIG. 14, categories of an upward attitude state and a downward attitude state, a rightward attitude state and a leftward attitude state, and a state in which an inclination is not generated are provided as attitude categories of the calibration board. Further, the inclination of the imaged calibration board and thresholds each of which is set in advance for each category are compared; in a case where the inclination is larger than a threshold, it is determined that the captured image is included in the corresponding category. For example, in a case where the inclination of the imaged calibration board is larger than the threshold of the upward attitude state, the captured image is regarded as the category of the upward attitude state. Further, as shown in (a) of FIG. 14, the frame display of an attitude category is shown by, for example, a solid line in a case where a calibration board regarded as the corresponding attitude has been imaged, and the frame display of an attitude category is shown by a broken line in a case where a calibration board has not been imaged in the corresponding attitude. By displaying such an attitude coverage situation, the data processing unit 55 clearly shows the user attitudes in which the calibration board is not imaged. Further, the data processing unit 55 may transmit information showing the attitude coverage situation to each of the imaging devices 20-1 to 20-7, and may display the attitude coverage situation individually for the imaging devices 20-1 to 20-7. By the data processing unit 55 causing such an attitude coverage situation to be displayed, the user can capture moving images while setting the calibration board in various attitudes with reference to the display of the attitude coverage situation.

Furthermore, the data processing unit 55 causes information regarding a frame that, in the coverage situation of space or attitude, has changed from a state of not being imaged to a state of being already imaged to be stored in the data storage unit 52. The data processing unit 55 causes the frame numbers, the time codes, or the like of, for example, a captured image in which the region showing the calibration board is different from the region showing the calibration board already imaged and a captured image in which the attitude of the calibration board is the first in the corresponding category to be stored in the data storage unit 52 for each of the imaging devices 20-1 to 20-7.

In step ST25, the data processing unit determines whether to switch the prescribed imaging device or not. The data processing unit 55 determines whether to switch the prescribed imaging device or not from the imaging state of the calibration board. The data processing unit 55 uses the coordinate values of the imaging devices 20-1 to 20-7 and the calibration board in the world coordinate system to detect an imaging device in which the calibration board is photographed in a larger size, with a smaller inclination, and in a more front position than the calibration board in the prescribed imaging device. In a case where the data processing unit 55 has detected an imaging device in which the calibration board is photographed in a large size, with a small inclination, and in a front position, the data processing unit 55 determines to switch the prescribed imaging device, and goes to step ST26; in a case where the data processing unit 55 has not detected such an imaging device, the data processing unit 55 determines not to switch the prescribed imaging device, and goes to step ST27.

In step ST26, the data processing unit switches the prescribed imaging device. The data processing unit 55 sets, as a prescribed imaging device, an imaging device in which the calibration board is photographed in a large size, with a small inclination, and in a front position, and acquires moving images from the newly set prescribed imaging device; and goes to step ST27.

In step ST27, the data processing unit determines whether imaging is completed or not. The data processing unit 55 determine whether to complete imaging or not on the basis of, for example, the user's manipulation or the coverage situation of space or attitude. The data processing unit 55 determines to end imaging in a case where it has detected imaging ending manipulation by the user. Further, the data processing unit 55 may determine whether to complete imaging or not on the basis of the coverage situation of space or attitude. For example, the data processing unit 55 determines to end imaging in a case where the ratio of the region where the calibration board is imaged is more than or equal to a prescribed value in each imaging device in space coverage situation displaying and furthermore the calibration board is imaged in a prescribed attitude in each imaging device in attitude coverage situation displaying. The data processing unit 55 goes to step ST28 in a case where it has determined to end imaging. Further, in a case where the data processing unit 55 does not determine to end imaging, the data processing unit 55 returns to step ST22; and repeatedly performs the recording of moving images, the calculation of the position and the attitude of the calibration board, and the displaying of the space coverage situation and the attitude coverage situation, while changing the position and the attitude of the calibration board.

In step ST28, the data processing unit causes moving image recording to end. The data processing unit 55 controls the operation of the imaging devices 20-1 to 20-7 to cause moving image recording to end.

By performing such imaging processing for fine calibration, the data processing unit 55 can acquire, with each imaging device, moving images in which the position of the calibration board is moved in a large area and the calibration board is set in various attitudes.

If imaging processing for fine calibration is ended, the data processing unit 55 goes from step ST2 to step ST3 of FIG. 3.

In step ST3, the data processing unit performs fine calibration processing. The data processing unit 55 acquires, from the imaging devices 20-1 to 20-7, captured images that have changed from a state of not being imaged to a state of being already imaged in the coverage situation of space and attitude. In the processing of step ST24 described above, information regarding frames that have changed from a state of not being imaged to a state of being already imaged in the coverage situation of space and attitude is stored in the data storage unit 52. Thus, the data processing unit 55 reads out this information from the data storage unit 52, and acquires captured images shown by the read out information from imaging devices. For example, the data processing unit 55 acquires captured images shown by read out information regarding the imaging device 20-1 from the imaging device 20-1. Similarly, the data processing unit 55 acquires captured images shown by read out information regarding the imaging devices 20-2 to 20-7 from the imaging devices 20-2 to 20-7. Furthermore, the data processing unit 55 uses captured images acquired from the imaging devices 20-1 to 20-7 to perform calibration processing, and acquires parameters with higher accuracy than parameters acquired by the simple parameter acquisition processing of step ST1.

If such processing is performed, the user can check the imaging situation of the calibration board used for fine calibration processing of a plurality of imaging devices on a real time basis by the displaying of the space coverage situation and the attitude coverage situation. Therefore, in fine calibration processing, positions and attitudes in which the calibration board has not been imaged become clear, and a necessity to perform the operation of imaging the calibration board again can be prevented. Hence, calibration can be performed with good efficiency. Further, the time required for calibration processing can be prevented from greatly varying. Furthermore, parameters can be calculated using captured images in a desired space coverage situation and a desired attitude coverage situation; therefore, parameters can be acquired with higher accuracy than parameters acquired by simple parameter acquisition processing.

<3. Other operations of information processing apparatus>

Parameters acquired by the simple parameter acquisition processing described above are used for the processing of presenting the space coverage state and the attitude coverage state so as not to perform the operation of imaging the calibration board again in a case where parameters are calculated with high accuracy by calibration processing. That is, it is sufficient for the parameter acquired by simple parameter acquisition processing to have such an accuracy that the imaging state of the calibration board can be determined by the displaying of the space coverage state and the attitude coverage state. Therefore, the data processing unit 55 may use, as well as parameters calculated from a prescribed number of still images, parameters or the like that are set in imaging devices or the like in advance.

For example, in a case where information of lens focal distances, lens distortion coefficients, etc. is held in the imaging devices 20-1 to 20-7, the data processing unit 55 may acquire the held information from the imaging devices 20-1 to 20-7, and may use the acquired information as simple parameters. Further, in a case where the imaging devices 20-1 to 20-7 are attached to a rig or the like, the rotation components and the translation components of the imaging devices 20-1 to 20-7 are components in accordance with the attachment state. Therefore, the data processing unit 55 may calculate rotation components and translation components in advance when the imaging devices 20-1 to 20-7 are attached, and may use, as simple parameters, attachment information showing the rotation components and the translation components in accordance with the attachment positions and the attitudes. Thus, if information prepared in advance is used as simple parameters, there is no need to image the calibration board in simple parameter acquisition processing, and calibration processing can be performed with better efficiency.

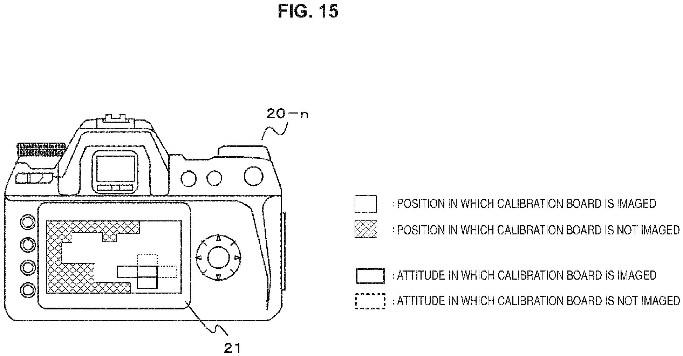

Further, the displaying of the space coverage situation and the attitude coverage situation is not limited to a case of being performed by the display unit 53 of the information processing apparatus 50, and the displaying may be made on display units provided in the imaging devices 20-1 to 20-7. FIG. 15 illustrates a case where the space coverage situation and the attitude coverage situation are displayed by a display unit 21 of the imaging device 20-1. Thus, if the space coverage situation and the attitude coverage situation are displayed by each imaging device, the space coverage situation and the attitude coverage situation can be checked easily in the installation position of the imaging device.

A series of processing described herein can be executed by hardware, software, or the combination thereof. In a case of executing the processing by the software, the processing can be executed by installing the program in which the processing sequence is recorded in the memory of the computer embedded in the dedicated hardware, or can be executed by installing the program in the general-purpose computer that can execute various processing.

For example, the program can be recorded on a hard disk, a solid state drive (SSD) or read only memory (ROM) as a recording medium in advance. Alternatively, the program can be temporarily or permanently stored (recorded) in (on) a removable recording medium such as a flexible disk, a compact disc read only memory (CD-ROM), Magneto Optical (MO) disk, a digital versatile disc (DVD), a Blu-Ray Disc (registered trademark) (BD), a magnetic disk, or a semiconductor memory card. Such a removable recording medium can be provided as so-called package software.

In addition, the program can be, not only installed on a computer from a removable recording medium, but also transferred wirelessly or by wire to the computer from a download site via a network such as a LAN (Local Area Network) or the Internet. In such a computer, a program transferred in the aforementioned manner can be received and installed on a recording medium such as built-in hardware.

Note that the effects described in the present specification are merely examples, not limitative; and additional effects that are not described may be exhibited. The present technology is not interpreted as being limited to the above-described embodiments of the technology. The embodiments of the technology disclose the present technology in the form of exemplification, and it is obvious that a person skilled in the art can make modification or substitution of the embodiments without departing from the gist of the present technology. In other words, in order to determine the gist of the present technology, the claims should be considered.

Additionally, the present technology may also be configured as below.

(1) An information processing apparatus including:
a data processing unit configured to calculate a position and an attitude in a three-dimensional space of a calibration index in a captured image of a prescribed imaging device and calculate a position and an attitude of the calibration index in a captured image of an imaging device different from the prescribed imaging device on a basis of the position and the attitude in the three-dimensional space, and present an imaging situation of a moving calibration index for each of the imaging devices.

(2) The information processing apparatus according to (1),
in which, as presentation of the imaging situation of the calibration index, the data processing unit displays, on an imaging screen, a space coverage situation that enables distinction between a region where the calibration index is located and a region where the calibration index is not located.

(3) The information processing apparatus according to (1) or (2),
in which, as presentation of the imaging situation of the calibration index, the data processing unit classifies the attitude of the calibration index into a plurality of attitude categories, and displays, on an imaging screen, an attitude coverage situation that enables distinction between an attitude category in which the attitude of the calibration index is included and an attitude category in which the attitude of the calibration index is not included.

(4) The information processing apparatus according to any one of (1) to (3),
in which the data processing unit calculates the position and the attitude in the three-dimensional space of the calibration index and the position and the attitude of the calibration index in the captured image of the imaging device different from the prescribed imaging device by using acquired internal parameters and external parameters of the prescribed imaging device and the different imaging device.

(5) The information processing apparatus according to (4),
in which the data processing unit captures still images of the calibration index by means of the prescribed imaging device and the imaging device different from the prescribed imaging device, and calculates the internal parameters and the external parameters from a prescribed number of still images between which the position and the attitude of the calibration index are different.

(6) The information processing apparatus according to (5),
in which the data processing unit groups the prescribed imaging device and imaging devices different from the prescribed imaging device, and captures still images of the calibration index for each group.

(7) The information processing apparatus according to (6),
in which the grouping is performed such that the calibration index appears simultaneously, the calibration index is able to be detected by the imaging devices of the same group even if the calibration index is tilted up to a prescribed amount, and an imaging device overlaps between adjacent groups.

(8) The information processing apparatus according to any one of (4) to (7),
in which the data processing unit uses, as the internal parameters, information held in the imaging device, and uses, as the external parameters, attachment information regarding an attachment position and an attitude of the imaging device.

(9) The information processing apparatus according to any one of (1) to (8),
in which the data processing unit acquires, from each of the imaging devices, a captured image in which a region showing the calibration index is different from a region showing the calibration index already imaged and a captured image in which the attitude of the calibration index is a first in a corresponding attitude category, and performs calibration processing using the acquired captured images.

(10) The information processing apparatus according to any one of (1) to (9),

in which the data processing unit sets, as the prescribed imaging device, an imaging device in which the calibration index is photographed in a large size, with a small inclination, and in a front position.

(11) The information processing apparatus according to any one of (1) to (10),

in which the data processing unit generates, for each of the imaging devices, display information showing the imaging situation of a moving calibration index, and outputs the display information to a corresponding imaging device.

Industrial Applicability

In the information processing apparatus, the information processing method, the program, and the imaging system of this technology, the position and the attitude in a three-dimensional space of a calibration index in a captured image of a prescribed imaging device are calculated, and the position and the attitude of the calibration index in a captured image acquired by an imaging device different from the prescribed imaging device are calculated on the basis of the position and the attitude in the three-dimensional space, and the imaging situation of a moving calibration index is presented for each imaging device. Hence, it is easy to perform imaging while setting the calibration index in positions in a large area and with desired inclinations, and the re-imaging of the calibration index can be prevented; thus, high-accuracy calibration processing can be performed with good efficiency. Therefore, this technology is suitable for an imaging system or the like that obtains a special video effect or the like.

Reference Signs List

10 imaging system
20-1 to 20-7 imaging device
30 repeater
50 information processing apparatus
51 communication unit
52 data storage unit
53 display unit
54 user interface (I/F) unit
55 data processing unit
56 bus
60 calibration board

**Claims**

1.  An information processing apparatus comprising:
    a data processing unit configured to calculate a position and an attitude in a three-dimensional space of a calibration index in a captured image of a prescribed imaging device and calculate a position and an attitude of the calibration index in a captured image of an imaging device different from the prescribed imaging device on a basis of the position and the attitude in the three-dimensional space, and present an imaging situation of a moving calibration index for each of the imaging devices.

2.  The information processing apparatus according to claim 1,
    wherein, as presentation of the imaging situation of the calibration index, the data processing unit displays, on an imaging screen, a space coverage situation that enables distinction between a region where the calibration index is located and a region where the calibration index is not located.

3.  The information processing apparatus according to claim 1,
    wherein, as presentation of the imaging situation of the calibration index, the data processing unit classifies the attitude of the calibration index into a plurality of attitude categories, and displays, on an imaging screen, an attitude coverage situation that enables distinction between an attitude category in which the attitude of the calibration index is included and an attitude category in which the attitude of the calibration index is not included.

4.  The information processing apparatus according to claim 1,

wherein the data processing unit calculates the position and the attitude in the three-dimensional space of the calibration index and the position and the attitude of the calibration index in the captured image of the imaging device different from the prescribed imaging device by using acquired internal parameters and external parameters of the prescribed imaging device and the different imaging device.

5. The information processing apparatus according to claim 4,
wherein the data processing unit captures still images of the calibration index by means of the prescribed imaging device and the imaging device different from the prescribed imaging device, and calculates the internal parameters and the external parameters from a prescribed number of still images between which the position and the attitude of the calibration index are different.

6. The information processing apparatus according to claim 5,
wherein the data processing unit groups the prescribed imaging device and imaging devices different from the prescribed imaging device, and captures still images of the calibration index for each group.

7. The information processing apparatus according to claim 6,
wherein the grouping is performed such that the calibration index appears simultaneously, the calibration index is able to be detected by the imaging devices of the same group even if the calibration index is tilted up to a prescribed amount, and an imaging device overlaps between adjacent groups.

8. The information processing apparatus according to claim 4,
wherein the data processing unit uses, as the internal parameters, information held in the imaging device, and uses, as the external parameters, attachment information regarding an attachment position and an attitude of the imaging device.

9. The information processing apparatus according to claim 1,
wherein the data processing unit acquires, from each of the imaging devices, a captured image in which a region showing the calibration index is different from a region showing the calibration index already imaged and a captured image in which the attitude of the calibration index is a first in a corresponding attitude category, and performs calibration processing using the acquired captured images.

10. The information processing apparatus according to claim 1,
wherein the data processing unit sets, as the prescribed imaging device, an imaging device in which the calibration index is photographed in a large size, with a small inclination, and in a front position.

11. The information processing apparatus according to claim 1,
wherein the data processing unit generates, for each of the imaging devices, display information showing the imaging situation of a moving calibration index, and outputs the display information to a corresponding imaging device.

12. An information processing method comprising:

calculating a position and an attitude in a three-dimensional space of a calibration index in a captured image of a prescribed imaging device and calculating a position and an attitude of the calibration index in a captured image of an imaging device different from the prescribed imaging device on a basis of the position and the attitude in the three-dimensional space; and
presenting an imaging situation of a moving calibration index by means of a data processing unit for each of the imaging devices.

13. A program for causing a computer to execute calibration of a plurality of imaging devices, the program causing the computer to perform:

a function of calculating a position and an attitude in a three-dimensional space of a calibration index in a captured image of a prescribed imaging device;
a function of calculating a position and an attitude of the calibration index in a captured image of an imaging device different from the prescribed imaging device on a basis of the position and the attitude in the three-dimensional space; and
a function of presenting an imaging situation of a moving calibration index by means of a data processing unit for each of the imaging devices.

**14.** An imaging system comprising:

a plurality of imaging devices configured to image a desired subject from different positions; and
an information processing apparatus configured to calibrate the plurality of imaging devices by using captured images of a calibration index acquired by the plurality of imaging devices,
wherein the information processing apparatus includes a data processing unit configured to calculate a position and an attitude in a three-dimensional space of the calibration index in a captured image of a prescribed imaging device and calculate a position and an attitude of the calibration index in a captured image of an imaging device different from the prescribed imaging device on a basis of the position and the attitude in the three-dimensional space, and present an imaging situation of a moving calibration index for each of the imaging devices.

# FIG. 1

# FIG. 2

51

COMMUNICATION
UNIT

53

DISPLAY UNIT

56

50

DATA
STORAGE
UNIT

52

USER I/F UNIT

54

DATA
PROCESSING
UNIT

55

# FIG. 3

START

ST1 PERFORM SIMPLE PARAMETER
ACQUISITION PROCESSING

ST2 PERFORM IMAGING
PROCESSING FOR FINE
CALIBRATION

ST3 PERFORM FINE CALIBRATION
PROCESSING

END

# FIG. 4

START SIMPLE PARAMETER
ACQUISITION PROCESSING

ST11 DISPLAY IMAGING
MANIPULATION FOR SIMPLE
PARAMETER ACQUISITION

ST12 IS IMAGING
COMPLETED?

No

Yes

ST13 PERFORM SIMPLE PARAMETER
CALCULATION PROCESSING

RETURN

# FIG. 5

54

| HS-a → | IMAGING BUTTON | CAMERA ID |
|---|---|---|
| HS-b → | Group A | 1—3 |
| HS-c → | Group B | 3—5 |
| HS-d → | Group C | 5—7 |
| HS-e → | Group D | N／A |
| | All | |

# FIG. 6

(a)

(b)

(c)

(d)

# FIG. 7

54

HS-a

HS-b

HS-c

HS-d

HS-e

IMAGING BUTTON | CAMERA ID

Group A — 1－3

Group B — 3－5

Group C — 5－7

Group D — N／A

All

SUBJECT: FRONT UPWARD

NUMBER OF CAPTURED IMAGES: a/n

HS-f

# FIG. 8

START IMAGING
PROCESSING FOR
FINE CALIBRATION

ST21 — START MOVING IMAGE
RECORDING

ST22 — CALCULATE POSITION AND
ATTITUDE OF CALIBRATION
BOARD

ST23 — CALCULATE POSITION AND
ATTITUDE IN WHICH
CALIBRATION BOARD APPEARS
IN ANOTHER IMAGING DEVICE

ST24 — DISPLAY SPACE COVERAGE
STATE AND ATTITUDE
COVERAGE STATE

ST25 — IS PRESCRIBED
IMAGING DEVICE TO
BE SWITCHED?
No

Yes

ST26 — SWITCH PRESCRIBED
IMAGING DEVICE

ST27 — IS IMAGING
COMPLETED?
No

Yes

ST28 — END MOVING IMAGE
RECORDING

RETURN

FIG. 9

# FIG. 10

WORLD COORDINATE SYSTEM

COORDINATE SYSTEM OF CALIBRATION BOARD

Yw

Zcb

Zw

P1 Xcb

Ycb P2

Xw

Rw→c1

P4

P3

Tw→c1

IMAGE COORDINATE SYSTEM OF CAMERA 1

uI1

vI1

Zc1

Ac1

Xc1

Yc1

COORDINATE SYSTEM OF IMAGING DEVICE C1

CALCULATE COORDINATE VALUES IN WORLD COORDINATE SYSTEM

# FIG. 11

# FIG. 12

FIG. 13

54

| IMAGING DEVICE 20-1 | IMAGING DEVICE 20-2 | IMAGING DEVICE 20-3 |
| IMAGING DEVICE 20-4 | IMAGING DEVICE 20-5 | IMAGING DEVICE 20-6 |
| IMAGING DEVICE 20-7 | | |

: POSITION IN WHICH CALIBRATION BOARD IS IMAGED

: POSITION IN WHICH CALIBRATION BOARD IS NOT IMAGED

# FIG. 14

54

| IMAGING DEVICE 20-1 | IMAGING DEVICE 20-2 | IMAGING DEVICE 20-3 |
|---|---|---|

| IMAGING DEVICE 20-4 | IMAGING DEVICE 20-5 | IMAGING DEVICE 20-6 |
|---|---|---|

IMAGING DEVICE 20-7

☐ : ATTITUDE IN WHICH CALIBRATION BOARD IS IMAGED

⌐ ¬ : ATTITUDE IN WHICH CALIBRATION BOARD IS NOT IMAGED

(a)

DOWNWARD STATE

RIGHTWARD STATE

LEFTWARD STATE

NO INCLINATION

UPWARD STATE

(b)

**FIG. 15**

: POSITION IN WHICH CALIBRATION BOARD IS IMAGED

: POSITION IN WHICH CALIBRATION BOARD IS NOT IMAGED

: ATTITUDE IN WHICH CALIBRATION BOARD IS IMAGED

: ATTITUDE IN WHICH CALIBRATION BOARD IS NOT IMAGED

## INTERNATIONAL SEARCH REPORT

| International application No. |
| --- |
| PCT/JP2017/016733 |

A. CLASSIFICATION OF SUBJECT MATTER
*G01B11/00(2006.01)i*

According to International Patent Classification (IPC) or to both national classification and IPC

B. FIELDS SEARCHED

Minimum documentation searched (classification system followed by classification symbols)
G01B11/00-11/30, B23Q17/00, H04N5/225, G06T1/00, G06T7/60, B25J9/00, B25J19/00

Documentation searched other than minimum documentation to the extent that such documents are included in the fields searched
Jitsuyo Shinan Koho        1922-1996    Jitsuyo Shinan Toroku Koho    1996-2017
Kokai Jitsuyo Shinan Koho   1971-2017    Toroku Jitsuyo Shinan Koho     1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2008-46687 A (Canon Inc.), 28 February 2008 (28.02.2008), entire text; all drawings & US 2008/0292131 A1   & US 2011/0228103 A1 & US 2013/0265393 A1 | 1-14 |
| A | JP 2016-1124 A (Canon Inc.), 07 January 2016 (07.01.2016), entire text; all drawings (Family: none) | 1-14 |
| A | JP 2002-27507 A (Sony Corp.), 25 January 2002 (25.01.2002), entire text; all drawings & US 2002/0113878 A1   & US 2005/0185049 A1 | 1-14 |

| ☒ | Further documents are listed in the continuation of Box C. | ☐ | See patent family annex. |
| --- | --- | --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 24 July 2017 (24.07.17) | 01 August 2017 (01.08.17) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

**INTERNATIONAL SEARCH REPORT**

International application No.

PCT/JP2017/016733

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2012-91280 A  (Mitsubishi Electric Corp.),<br>17 May 2012 (17.05.2012),<br>entire text; all drawings<br>(Family: none) | 1-14 |
| A | JP 2013-134088 A  (Mitsubishi Heavy Industries,<br>Ltd.),<br>08 July 2013 (08.07.2013),<br>entire text; all drawings<br>& US 2014/0340508 A1    & WO 2013/099302 A1<br>& TW 201325811 A         & CN 103906989 A<br>& KR 10-2014-0089392 A | 1-14 |
| A | US 6137893 A  (COGNEX CORP.),<br>24 October 2000 (24.10.2000),<br>WHOLE DOCUMENTS<br>& JP 2001-524228 A      & WO 1998/018117 A2<br>& EP 883857 A2 | 1-14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   JP 2014070978 A

**Non-patent literature cited in the description**

•   **ZHENGYOU ZHANG.** A Flexible New Technique for Camera Calibration. *Technical Report MSR-TR-98-71,* December 1998